# EUROPEAN PATENT SPECIFICATION

(11) **EP 1 328 752 B1**
(45) Date of publication and mention of the grant of the patent: **14.02.2007**
(21) Application number: 01982930.8
(22) Date of filing: 15.10.2001
(51) Int. Cl.: F16L 59/153, B29C 63/18

(54) **METHOD AND DEVICE FOR THE PRODUCTION OF INSULATED PIPES**
VERFAHREN UND VORRICHTUNG ZUR HERSTELLUNG VON WÄRMEISOLIERTEN ROHREN
PROCEDE ET DISPOSITIF PERMETTANT DE FABRIQUER DES TUYAUX CALORIFUGES

(30) Priority: 13.10.2000 NL 1016404
(43) Date of publication of application: 23.07.2003
(73) Proprietor: Thermaflex International Holding B.V., 5145 NS Waalwijk (NL)
(72) Inventor: MAAS, Cornelis, Henricus, Johannes, NL-5145 NS Waalwijk (NL); BAARS, Gerrit-Jan, NL-5145 NS Waalwijk (NL); DE BELL, Humphrey, Reginald, NL-5145 NS Waalwijk (NL)
(74) Representative: De Hoop, Eric
(86) International application number: PCT/NL2001/000756
(87) International publication number: WO 2002/031400

(56) References cited:
- EP-A- 0 038 974
- EP-A- 0 844 062
- EP-A- 0 897 788
- US-A- 4 844 762
- US-A- 4 929 409
- PATENT ABSTRACTS OF JAPAN vol. 1999, no. 11, 30 September 1999 (1999-09-30) -& JP 11 151753 A (MITSUBISHI MATERIALS CORP), 8 June 1999 (1999-06-08)

## Description

The invention relates to a method for manufacturing an assembly of a heat-insulation tube and at least a pipe accomodated therein for transport of fluid, as described in the preamble of claim 1. The invention further relates to aa assembly for carrying out said method as decribed in the preamble of claim 8.

Such a method and such an assembly are known from US-A-4.929.409, in which a pipe is surrounded by a heat-insulation tube or casing and in a further step an outer layer is co-extruded on the tube or casing and subsequently provided with circumferential ribs.

Insulated tubes or pipes are used for conducting cooling medium, such as in cooling plants, and heating medium, such as in central heating systems, or both, in air treatment systems. The pipe itself is made of copper or synthetic material. The insulation is provided by an insulation casing, for instance of polyethylene foam, to be arranged around the pipe, on which casing a protective outer layer of synthetic foil may have been arranged.

In some uses it is advantageous that the outer layer is formed with circumferential ribs. Such profiled outer layers are known per se as bendable, rather rigid (manufactured from a thermosetting synthetic material) sleeves for pipes for fluid of for instance floor heatings or air-conditioning systems. In those applications, the pipe lies free in the ribbed sleeve. A drawback of this is that in the air space between the pipe and the sleeve a chimney effect may occur, which reduces the efficiency. Furthermore it is disadvantageous that the pipe under the influence of gravity will lie eccentrically in the sleeve.

The insulation casings are supplied in lengths or as rolls, and are arranged around the pipes at the location of the installation, which may take place by axially sliding or by sliding the casing from aside around the pipe. A drawback of this is that the supply of both parts takes place separately, and that a lot of air and therefore unused volume is carried along with the casings. The arrangement of the casings requires a lot of effort, in which it cannot be guaranteed that the casing in longitudinal direction is perfectly contiguous. Furthermore it is a drawback that at the location two stocks have to be kept. That also holds good for the supplier, who moreover has to purchase from two plants, namely the plant for pipes and the plant for casings.

It is an object of the invention to improve on this.

To that end, from one aspect, the invention provides a method for manufacturing an assembly of a heat-insulation tube and at least one pipe accommodated therein for transport of fluid, as described in claim 1.

Thus in a continuous, single line operation, a complete, assembled insulated cooling/heating pipe is provided, in a simple, small space requiring manner, which pipe can be transported to the location of installation, and can be stored and managed there as if it were pre-assembled. The outer layer is supplied to the pipe/casing assembly with rib surface. Extruding the outer layer and forming the ribs can therefore be carried out parallel to extruding/joining the casing.

In an advantageous manner, vide claim 2, this takes place by means of rib formers radially engaging the arranged casing, preferably by two rib formers that diametrically opposite each other engage and deform the outer layer. The deformation of the outer layer here takes place when it is supported by the casing and the pipe, during continuous transport.

In a preferred embodiment, the outer layer, after arranging the outer layer around the assembly pipe/casing and while exerting a radial/tangential compression force on the casing and outer layer, at the location of the longitudinal seam, is closed at the edges, for instance by fusing. In one treatment the casing and the outer layer are closed around the pipe. The outer layer then also keeps the casing itself closed, without the casing itself having to be sealed at the location of the longitudinal seam.

This is preferably done by subjecting the edges of the outer layer in tangential direction to a heated agent for the fusing process and then urging them against each other and subsequently letting them cool down to cure/harden. The edges are preferably heated with gas here, particularly heated air.

Another objection against the known ribbed sleeves is that the deformability of the sleeves is limited, which under circumstances may render installation difficult. To improve on this it is provided according to the invention that the outer layer is arranged abutting and detached from the casing and the circumferential ribs and the remaining portion of the outer layer situated in between them is formed in such a manner that it can be axially pushed in. This not only render axial shortening or lengthening possible, but also improves bendability. The deformation may here occur at the location of the folding lines in the outer layer. Undesired pleating (in bends situated in view) is prevented in this way. It is preferred here that the outer layer is made of a thermoplastic material, particularly polyolefin or PVC.

It is noted that an assembled line for air conditioning systems is known, comprising a copper fluid line, a polyethene foam insulation casing surrounding it, and a thin layer of polyethene surrounding that, which layer is provided with pyramid-like profilings. The outer layer is brought to the casing in the form of a flat strip, is wrapped around the casing under the influence of heat and is subsequently sealed in a mould. After that the pipe is axially inserted into the casing, which is kept under pressure in order to increase the diameter.

Preferably the assembly pipe/casing/outer layer is rolled up in a continuous movement and is stored as a roll.

Preferably the casing -made of a foamed polyolefin- is provided with a longitudinal cut and arranged around the pipe from aside. During transport of the pipe the casing, after having been extruded, is placed around the pipe, by inserting, as relatively seen, the pipe into the casing through the longitudinal cut.

With the method according to the invention a pipe assembly is obtained, in which the pipe is kept in its place within the ribbed outer layer by the insulation casing, which casing also prevents a chimney effect. The ribs ensure anchoring when accommodated in a concrete layer, so that when necessary -in case of a leak to be tracked down or to be closed- the pipes can be pulled out, without the outer layer coming along.

From another aspect the invention provides an assembly for carrying out the method according to any one of the preceding claims, as described in claim 8.

Preferably the assembly is further provided with means for closing the outer layer in circumferential sense after arranging the outer layer around the assembly pipe/casing.

Preferably the closing means are provided with means for heating the longitudinal head edges of the outer layer and with means for tangentially bringing the longitudinal edges against each other. Preferably the heating means comprise nozzles that can be placed between the longitudinal edges and are oriented thereto, to which nozzles one or more lines for supply of heated fluid -particularly air- have been connected. In that way the heat necessary for the welding of the edges is supplied as directed and local as possible.

Preferably the nozzles have been arranged on a carrier for them, in which the carrier is drivable for movement of the nozzles in process direction, so that the effectiveness is maximal, or, depending on the material to be sealed, in opposite direction. A simple arrangement is one in which the carrier is a circumferentially driven carrier, preferably a rotatingly driven disk.

Preferably a stop is also provided, such as a foot, in which way it is prevented that the carrier, particularly the rotating disk, contacts the pipe.

Preferably, near the heating means, means are positioned for cooling the parts of the assembly that contact the portions of the pipe/casing/outer layer situated outside the contact area of the longitudinal edges, or are able to transfer heat to these portions in another way, in order not to let the heat supplied by the heating means exert an unwanted influence on the other portions of the casing and the outer layer.

Preferably the means for arranging the circumferential ribs comprise two or more rib formers radially engaging the outer layer, preferably with shaping bands circumferentially driven along with the outer layer. In an advantageous manner the rib formers are positioned diametrically opposite each other to engage and deform the outer layer over the entire circumference in a reliable and stable manner.

Preferably the means for arranging the casing around the pipe and the third transport means for supplying the outer layer to the assembly pipe/casing are placed at least partially parallel, on the same frame.

It is furthermore preferred that the means for arranging the casing around the pipe and the means for opening the outer layer prior to arranging it around the assembly pipe/casing are placed on the same frame.

From a further aspect the invention provides a roll of assembled pipe for temperature conditioning, comprising a pipe for passage of fluid, a casing of insulating material surrounding it and an outer layer provided with ribs surrounding it, in which the outer layer is provided with a longitudinal seal and the casing underneath it is interrupted.

From another aspect the invention provides a roll of assembled pipe for temperature conditioning, comprising a pipe for passage of fluid, a casing of insulating material surrounding it and an outer layer provided with ribs surrounding it, in which the outer layer is provided with a longitudinal seal and the casing underneath it is interrupted.

From yet another aspect the invention provides a roll of assembled pipe for temperature conditioning, comprising a pipe for passage of fluid, a casing of insulating material surrounding it and around it, abutting and detached, a sleeve provided with circumferential ribs. Preferably the sleeve can be axially pushed in/pulled out and/or is manufactured of thermoplastic material.

The invention will be elucidated on the basis of a number of exemplary embodiments shown in the attached figures, in which:
Figure 1 schematically shows an arrangement with which according to the invention an assembled insulated pipe can be manufactured;
Figure 2 is an alternative arrangement with which according to the invention an assembled insulated pipe can be manufactured;
Figure 3 is a part of the arrangement according to figure 1 or 2, for making a ribbed tube;
Figures 4A and 4B show a side view and a cross-section, respectively, of a part for an arrangement for closing the assembled heat-insulating tube according to the invention; and
Figures 5A and 5B show a cross-section and a longitudinal section, respectively, of an assembled heat-insulating tube made with the arrangement according to figure 1.

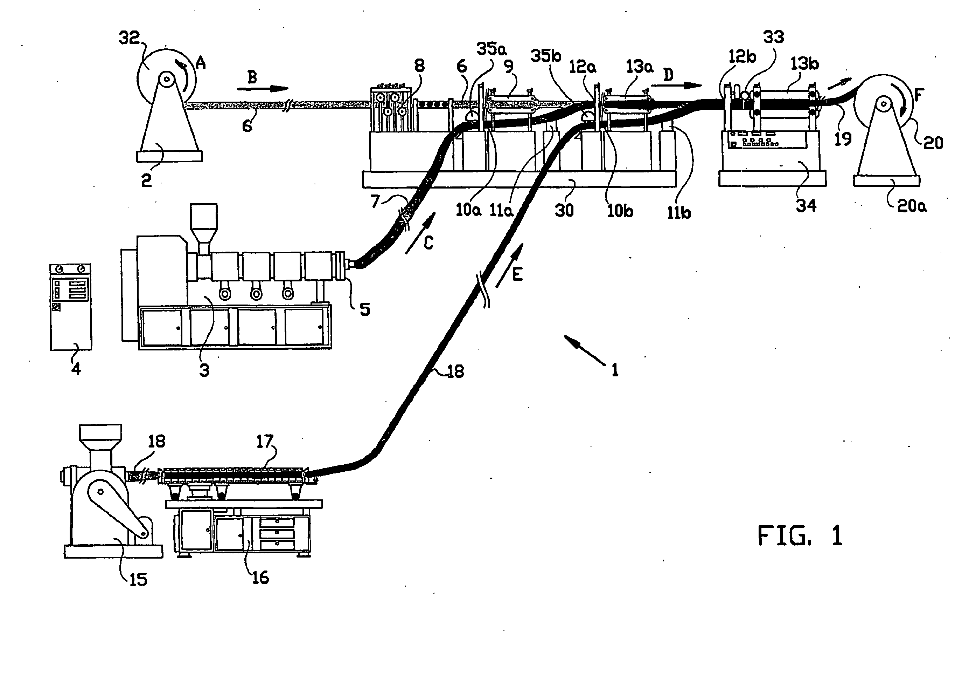

The arrangement 1 in figure 1 is located on a limited space. It comprises a holder 2 with a supply roll 3 of a pipe 6 made of copper or a hard synthetic material, which supply roll can be unwound in the direction of A to be subsequently transported further in the process in the direction B.

Adjacent to it an extruder 3 is positioned having an extruder nozzle 5, from which a casing 7 made of synthetic insulating material is extruded in the direction C.

A control panel 4 is provided for controlling the entire arrangement 1.

Downstream of the holder 2 a joining station 30 is situated having a stretching device 8 and downstream of it a pipe feed device 9 provided with driven rollers for the pipe 6, and parallel to it, also in the station 30, a guiding device 10a for the casing 7, and an opening means 11 a to open up the casing 7 in longitudinal direction. At extrusion from the nozzle 5 the casing 7 can already be provided with a longitudinal cut, by means of blade 35a, but may also be provided with it at the location of the guiding means 10a or the opening means 11 a.

Downstream of it orienting means 12a is situated, where the casing 7 kept open is pushed sidewards onto the pipe 6 kept stretched. This takes place during continuous transport of the pipe 6 in the direction B and the casing 7 in the direction C.

Downstream of the location of joining pressing and passage means 13a is situated for pressing the casing 7 around the pipe and passing it further on.

Parallel to the extrusion of the casing 7 an outer layer 18 is formed, from the extruder 15. The outer layer 18 is a relatively thick layer (for instance 0.5 mm), which may form a separate sleeve. Said sleeve 18 is then engaged in the forming station 16, in which circumferential ribs are formed extending around the entire circumference, by means of two rib formers 17 that circulate and travel along. Here use is made of vacuum openings in the rib formers to support the sleeve during forming the ribs. The outer layer 18 is transported in the direction E and is pushed to the assembly pipe 6/casing 7, parallel to pressing and passage means 13a, through cutting blade 35b, via guiding means 10b, and via opening means 11 b -which are also provided on station 30-, after which at a next, immediately following station 34 with orienting means 12b it is actually slid around said assembly. Immediately downstream of it a sealing device 33 is situated, to seal the outer layer 18. In this example use can be made of the arrangement shown in the figures 5A and 5B.

The assembled final product 19 is pressed and passed on by pressing and passage means 13b, and in the direction F rolled up on a reel 20 on holder 20a. The reel 20 can be stored and then dispatched to a location of the installation activities.

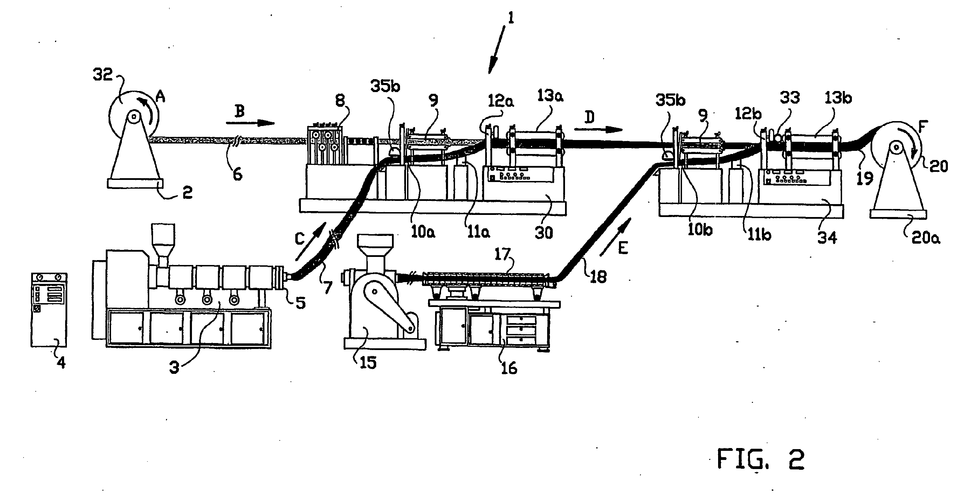

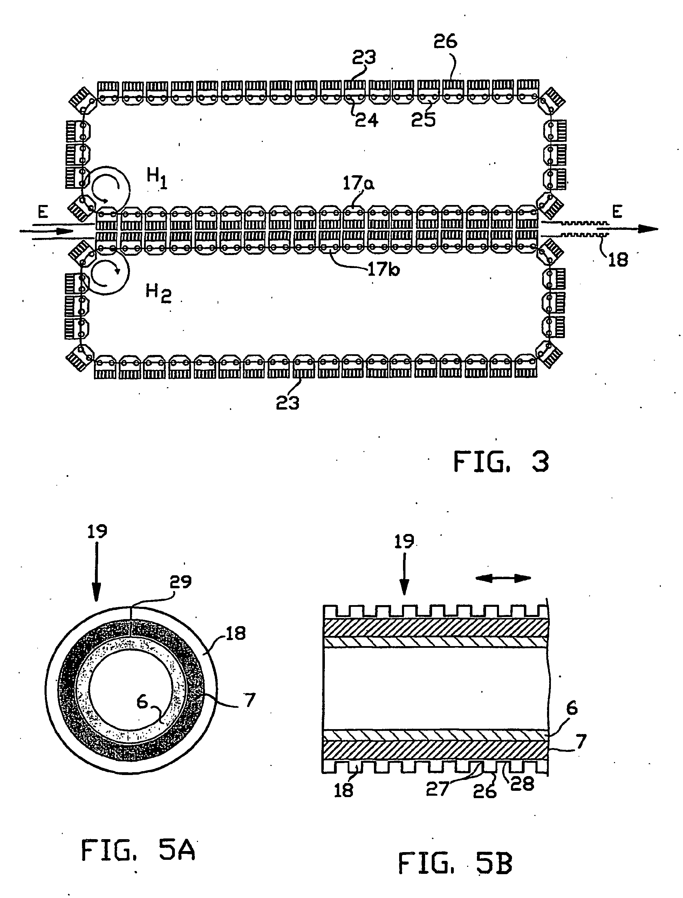

In the figure 3 the rib formers 17 are shown in top view. It here regards two rib formers 17a, 17b, travelling around in the directions H1 and H2, respectively. They each consist of chains 24 or guides, that are circumferentially driven (for instance by a rack), and on which rib forming shackles 23 have been arranged. The rib forming shackles 23 connect to each other and each consists of a holder 25 having form ribs 26. Said form ribs 26 are semicircular convex and teeth-shaped, in order to be able to form the profile shown on the right-hand side of figure 2. The form ribs 26 of shackles 23 of the rib formers 27a,b running opposite each other, are connect to each other.

The final product is shown in the figures 5A and 5B, in which it can be seen that in the middle a pipe 6 made of synthetic material or copper is present and surrounding it a casing of for instance polyolefin foam ((H) CFK free and shrink-free), such as polyethene foam 7, around it a rib-shaped sleeve 18. The rib-shaped sleeve 18 is more or less battlement-shaped in cross-section, having rib-shaped elevations 26 and channels 28. The material used is thermoplastic synthetic material, such as polyolefin or PVC, and the sleeve 18 may at least deform in axial direction by folding at the location of the corner areas 27, so that the length of the sleeve 18 becomes larger or smaller, as the fitter desires. Here the casing 7 is abutting and detached with respect to the sleeve 18, so that its shortening or lengthening can take place without too much trouble. The casing 7 can be tightly arranged around the pipe 6.

It is also possible to use an arrangement slightly different from the one of figure 1, to which end figure 2 is referred to. There the supply of the outer layer or sleeve 18 is entirely taken care of by station 34, which is provided with a pipe/casing passage device 9', with guiding device 10b, an opening means 11 b, an orienting means 12b, a sealing device 33 and a pressing device 32.

Both in the arrangement of figure 1 and in the one of figure 2 the extruders 32 and 15 have been placed parallel and level beside the line of the pipe 6, so that as little occupation of space widthwise as possible takes place and supply times are short, which is advantageous in case of failures.

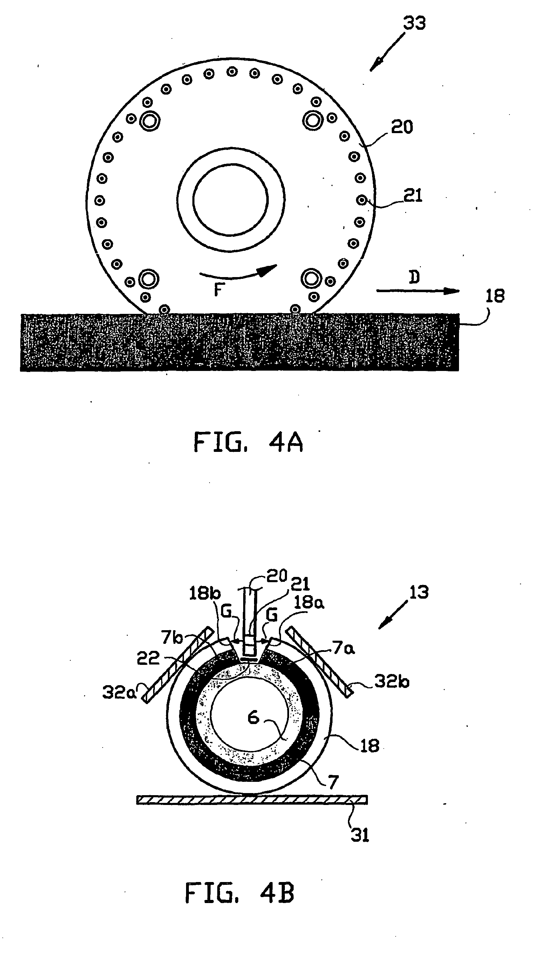

For sealing device 33 reference can be made to the figures 4A and 4B, where a disk 20 is shown, that is driven in the direction F, in order to thus run along at its circumference in the direction D of the assembled tube, of which the outer layer 18 is shown here. If the material requires such the disk can be driven in opposite direction. The disk 20 is provided with a circumferential series of holes 21 on both sides, which holes are connected to controllable supply means for heated air, which means are not further shown. The disk 20 is suspended from a frame that is not further shown, in which also a foot 22 is attached, that extends underneath disk 20, as schematically shown in figure 4B. Said foot 22 is in contact with the upper surface of the pipe 6 in order to place the disk 20, particularly the holes 21 situated in its lowermost area, at the correct distance above the pipe 6. The distance between the foot and the disk is adjustable.

In operation the heated air is allowed out of the holes 21 in the direction G to either side, exactly on the end edges 18a, 18b of the (opened) sleeve 18 and the edges 7a, 7b of the casing 7. The pipe 6 here remains undisturbed, shielded by the foot 22 and remains undamaged. The surrounding parts of the machine, not further shown here, that engage the rest of the assembled tube for transport, can be cooled here.

Immediately downstream of the disk 20 at the location of 13a, transporting pressing belts 31, 32a, 32b have been positioned, which according to a triangular arrangement engage the assembled tube and exert pressing force on it to press the edges 7a and 7b of the casing 7 and the edges 18a, 18b of the layer 18 against each other. The edges 18a, 18b and also the edges 7a, 7b of the casing 7 fuse together here, so that a circumferentially closed insulation tube is obtained that will not open in bends.

The flat embodiment of among others the pressing belt 31 also makes it possible to process other profiles, for instance with a flat lower side.

After having been treated such, the final product 19 shown in figure 4A can be obtained, where a pipe, particularly a copper pipe 6, is surrounded by a polyolefin foam casing 7, which in turn is surrounded with a ribbed layer 18, that has been welded at the location of 29.

## Claims

1. Method for manufacturing an assembly of a heat-insulation tube and at least a pipe accommodated therein for transport of fluid, in which in a continuous consecutive series of process steps the pipe is supplied, which pipe may for instance be made of synthetic material or metal, a casing of synthetic insulation material is extruded and arranged around the pipe, and in which a sealing outer layer is extruded, after which circumferential ribs are formed in the outer layer, **characterized in that** the outer layer provided with the circumferential ribs is moved towards the pipe/casing assembly, is provided with a longitudinal cut, and then is arranged around the casing from aside.

2. Method according to claim 1, in which the circumferential ribs are formed by means of a series of rib formers radially engaging the outer layer leaving its extruder, sai rib formers travelling along with the extruded outer layer, in which, preferably, there are two series of rib formers diametrically opposite each other engage and deform the outer layer, wherein, preferably, vacuum openings in the rib formers are used for supporting the outer layer during forming of the ribs.

3. Method according to claim 1 or 2, in which the outer layer has a radially extending interruption, which after arranging the outer layer around the assembly pipe/casing and while exerting a radial/tangential compression force on the casing and outer layer, at the location of the longitudinal seam, is sealed at the edges.

4. Method according to claim 3, in which for a fusing process the edges are subjected in tangential direction to a heated agent and are then urged against each other and are subsequently cooled down.

5. Method according to claim 3 or 4, in which the edges are heated with gas.

6. Method according to any one of the preceding claims, in which the circumferential ribs and portions of the outer layer situated in between them are realised in manner that they can be axially pushed in and in which preferably the outer layer is made of a thermoplastic material.

7. Method according to any one of the preceding claims, in which the outer layer is arranged abutting and detached from the casing.

8. Assembly (1) for carrying out the method according to any one of the preceding claims, comprising a stock (2, 32) of pipe, first transport means (8, 9) for continuously transporting the pipe (6) from the stock in a process direction to subsequent processing stations, an extruder (3) for continuously extruding an insulation casing (7), second transport means for continuously leading the insulation casing from the extruder to the pipe downstream of its stock, means (129, 130) for arranging the insulation casing around the pipe during continuous transport of both in order to form an assembly pipe/casing, an extruder (15) for extruding the outer layer (18), shaping means (17) for arranging circumferential ribs in the outer layer, and means (20a) for taking up the assembly pipe/casing/ouyer layer on a supply roll, **characterized by** third transport means for supplying the outer layer (18) provided with ribs from the shaping means (17) to the assembly pipe/casing (6, 7), and by means (12b, 13b) for arranging the outer layer around the assembly pipe/casing during continuous transport of both.

9. Assembly according to claim 8, further provided with means (33) for closing the outer layer in circumferential sense after arranging the outer layer around the assembly pipe/casing, said closing means being preferably provided with means (20, 21) for heating the longitudinal head edges (18a, 18b) of the outer layer and with means for tangentially (31, 32a,b) bringing the longitudinal head edges against each other.

10. Assembly according to claim 9, in which the heating means comprise nozzles (21) that can be placed between the longitudinal edges (18a, 18b) and are oriented thereto, to which nozzles one or more lines for supply of heated fluid have been connected, in which, preferably, the nozzles (21) have been arranged on a carrier (20) for them, in which the carrier is drivable for movement of the nozzles in process direction, or -depending on the material to be sealed- in opposite direction, in which preferably also a stop (22) is provided, such as a foot, for preventing that the carrier contacts the pipe (6).

11. Assembly according to claim 10, in which the carrier (20) is a circumferentially driven carrier, preferably a rotatingly driven disk.

12. Assembly according to claim 9, 10 or 11, in which near the heating means (20, 21), means are positioned for cooling the parts of the assembly that contact the portions of the pipe/casing/outer layer situated outside the contact area of the head longitudinal edges, or are able to transfer heat to these portions in another way.

13. Assembly according to any one of the claims 8-12, in which the means for arranging the circumferential ribs comprises two or more rib formers (17a, 17b) radially engaging the outer layer, in which, preferably, the rib formers are formed by shaping bands circumferentially driven along with the outer layer, preferably two rib formers being positioned diametrically opposite each other to engage and deform the outer layer over the entire circumference.

14. Assembly according to any one of the claims 8-13, in which the means for arranging the casing around the pipe and the third transport means for supplying the outer layer to the assembly pipe/casing are placed at least partially parallel, on the same frame (30) in which, preferably, the means for opening the outer layer prior to arranging it around the assembly pipe/casing are placed on the same frame (30).

15. Roll of assembled pipe for temperature conditioning, produced by carrying out the method according to any one of the claims 1-7, comprising a pipe (6) for passage of fluid, a casing (7) of insulating material surrounding it and an outer layer (18) provided with ribs surrounding it, in which the outer layer has edges (7a, 7b) that have been fused together and the casing has edges (18a, 18b) that have been fused together.

16. Roll of assembled pipe for temperature conditioning, produced by carrying out the method according to any one of the claims 1-7 comprising a pipe (6) for passage of fluid, a casing (7) of insulating material surrounding it and an outer layer (18) provided with ribs surrounding it, in which the outer layer is provided with a longitudinal seal and the casing underneath it is interrupted.

17. Roll of assembled pipe for temperature conditioning, produced by carrying out the method according to any one of the claims 1-7, comprising a pipe (6) for passage of fluid, a casing (7) of insulating material surrounding it and around it, abutting and detached, a sleeve (18) provided with circumferential ribs.

18. Roll of assembled pipe according to claim 17, in which the sleeve (18) can be axially pushed in/pulled out and/or is manufactured of thermoplastic material.

## Patentansprüche

1. Verfahren zum Herstellen eines Gefüges einer wärmeisolierenden Leitung und zumindest eines darin aufgenommenen Rohrs zur Beförderung von Fluidum, wobei in einer kontinuierlichen, aufeinanderfolgenden Reihe von Prozeßschritten das Rohr, welches zum Beispiel aus Kunststoff oder Metall hergestellt sein kann, angeführt wird, ein Mantel aus synthetischem Isolierungssmaterial extrudiert und rund um das Rohr angeordnet wird, und wobei eine abdichtende Außenschicht extrudiert wird, worauf Umfangsrippen in der Außenschicht geformt werden, **dadurch gekennzeichnet, daß** die mit den Umfangsrippen versehene Außenschicht in Richtung auf das Rohr/Mantel-Gefüge bewogen wird, mit einem Längsschnitt versehen wird, und dann von der Seite rund um den Mantel angeordnet wird.

2. Verfahren nach Anspruch 1, wobei die Umfangsrippen durch eine Reihe von Rippenformern, die die Außenschicht, die den Extruder verlaßt, angreifen, geformt werden, wobei die Rippenformer mit der extrudierten Außenschicht mitlaufen, wobei, vorzugsweise, zwei Reihen von Rippenformern diametral gegenübereinander die Außenschicht angreifen und verformen, wobei, vorzugsweise, Vakuumöffnungen in den Rippenformern benutzt werden um die Außenschicht während dem Verformen der Rippen zu stützen.

3. Verfahren nach Anspruch 1 oder 2, wobei die Außenschicht eine sich radial erstreckende Unterbrechung hat, welche nach dem Anordnen der Außenschicht rund um das Rohr/Mantel-Gefüge und während dem Ausüben einer radialen/tangentialen Pressungskraft auf dem Mantel und der Außenschicht, an der Stelle der Längsnaht, an den Rändern abgedichtet wird.

4. Verfahren nach Anspruch 3, wobei die Ränder für einen Schmelzprozeß in Tangentialrichtung mit einem erhitzten Mittel berührt werden und dann gegeneinander gepresst werden und darauf abgekühlt werden.

5. Verfahren nach Anspruch 3 oder 4, wobei die Ränder mit Gas erhitzt werden.

6. Verfahren nach einem der vorhergehenden Ansprüche, wobei die Umfangsrippen und die dazwischen gelegene Abschnitte der Außenschicht derartig realisiert werden, daß sie axial eingedrückt werden können und wobei vorzugsweise die Außenschicht aus einem thermoplastischen Material hergestellt ist.

7. Verfahren nach einem der vorhergehenden Ansprüche, wobei die Außenschicht angrenzend an und lose vom Mantel angeordnet wird.

8. System (1) zum Ausführen des Verfahrens nach einem der vorhergehenden Ansprüche, umfassend einen Vorrat (2,32) von Rohr, erste Beförderungsmittel (8,9) zum kontinuierlich Fördern des Rohrs (6) vom Vorrat in einer Prozeßrichtung zu darauffolgenden Bewirkungsstationen, einen Extruder (3) zum kontinuierlich Extrudieren eines Isolierungsmantels (7), zweite Beförderungsmittel zum kontinuierlich Führen des Isolierungsmantels von dem Extruder zum Rohr stromabwärts seines Vorrats, Mittel (129, 130) zum rund um das Rohr Anordnen des Isolierungsmantels während kontinuierlicher Beförderung von beiden um ein Rohr/Mantel-Gefüge zu bilden, einen Extruder (15) zum Extrudieren der Außenschicht (18), Formmittel (17) zum Anordnen von Umfangsrippen in der Außenschicht, und Mittel (20a) zum Aufnehmen des Rohr/Mantel-Gefüges/der Außenschicht auf einer Zufuhrrolle, **gekennzeichnet durch** dritte Beförderungsmittel (17) zum Zuführen der mit Rippen versehenen Außenschicht (18) von den Formmitteln (17) zum Rohr/Mantel-Gefüge (6,7) und **durch** Mittel (12b,13b) zum Anordnen der Außenschicht rund um das Rohr/Mantel-Gefüge während kontinuierlicher Beförderung von beiden.

9. System nach Anspruch 8, weiter mit Mitteln (33) zum Schließen der Außenschicht im Umfangssinn nach dem Anordnen der Außenschicht rund um das Rohr/Mantel-Gefüge versehen, wobei die Mittel zum Schließen vorzugsweise mit Mitteln (20,21) zum Erhitzen der Kopflängsränder (18a,18b) der Außenschicht und mit Mitteln zum tangential (31,32a,b) gegeneinander Bringen der Kopflängsränder versehen sind.

10. System nach Anspruch 9, wobei die Erhitzungsmittel zwischen den Längsrändern (18a, 18b) anzuordnende und darauf gerichtete Mundstücke (21) umfassen, worauf eine oder mehrere Leitungen für Zufuhr von erhitzem Fluidum angeschlossen sind, wobei, vorzugweise, die Mundstücke (21) auf einem Träger (20) dafür angeordnet sind, wobei der Träger anzutreiben ist für Bewegung der Mundstücke in Prozeßrichtung, oder - abhängig von dem Abdichtungsmaterial - in entgegengesetzte Richtung, wobei vorzugsweise auch ein Anschlag (22), wie ein Sockel, womit verhütet wird, daß der Träger das Rohr (6) berührt, vorgesehen ist.

11. System nach Anspruch 10, wobei der Träger (20) einen umlaufend angetriebenen Träger ist, vorzugsweise eine rotierend angetriebene Scheibe.

12. System nach Anspruch 9, 10 oder 11, wobei bei den Erhitzungsmitteln (20,21) Mittel zum Kühlen der Teile des Systems die mit den außen dem Kontaktgebiet der Kopflängsränder gelegenen Abschnitten der Rohr/Mantel/Außenschicht Kontakt machen, oder auf eine andere Weise Wärme an die Abschnitte geben können, aufgestellt sind.

13. System nach einem der Ansprüche 8-12, wobei das Mittel zum Anordnen der Umfangsrippen zwei oder mehrere Rippenformer (17a,17b), die die Außenschicht radial angreifen, umfaßt, wobei, vorzugsweise, die Rippenformer durch umlaufend mit der Außenschicht mitlaufend angetriebene Formbänder gebildet werden, wobei vorzugweise zwei Rippenformer diametral gegenübereinander aufgestellt sind um die Außenschicht über den ganzen Umfang anzugreifen und zu verformen.

14. System nach einem der Ansprüche 8-13, wobei die Mittel zum Anordnen des Mantels rund um das Rohr und die dritten Beförderungsmittel zum Zuführen der Außenschicht an das Rohr/Mantel-Gefüge zumindest teilweise parallel auf demselben Rahmen (30) angeordnet sind, wobei, vorzugweise, die Mittel zum Öffnen der Außenschicht vor dem Anordnen rund um das Rohr/Mantel-Gefüge auf demselben Rahmen (30) angeordnet sind.

15. Rolle von zusammengesetztem Rohr für Temperaturkonditionierung, erzeugt durch das Ausführen des Verfahrens nach einem der Ansprüche 1-7, umfassend ein Rohr (6) für Durchlaß von Fluidum, einen darum gelegenen Mantel (7) aus isolierendem Material und eine darum gelegene, mit Rippen versehene Außenschicht (18), wobei die Außenschicht miteinander verschmolzene Ränder (18a,18b) und der Mantel miteinander verschmolzene Ränder (18a, 18b) hat.

16. Rolle von zusammengesetztem Rohr für Temperaturkonditionierung, erzeugt durch das Ausführen des Verfahrens nach einem der Ansprüche 1-7, umfassend ein Rohr (6) für Durchlaß von Fluidum, einen darum gelegenen Mantel (7) aus isolierendem Material und eine darum gelegene, mit Rippen versehene Außenschicht (18), wobei die Außenschicht mit einer Längsnaht versehen ist und der Mantel darunter unterbrochen ist.

17. Rolle von zusammengesetztem Rohr für Temperaturkonditionierung, erzeugt durch das Ausführen des Verfahrens nach einem der Ansprüche 1-7, umfassend ein Rohr (6) für Durchlaß von Fluidum, einen darum gelegenen Mantel (7) aus isolierendem Material und darum, angrenzend und lose, eine mit Umfangsrippen versehene Hülse (18).

18. Rolle von zusammengesetztem Rohr nach Anspruch 17, wobei die Hülse (18) axial eingedrückt/ausgezogen werden kann und/oder aus thermoplastischem Material hergestellt ist.

## Revendications

1. Procédé de fabrication d'un assemblage d'un tube d'isolation thermique et d'au moins un tuyau logé à l'intérieur de celui-ci pour le transport de fluide, dans lequel, en une série consécutive continue d'étapes du processus, le tuyau est alimenté, lequel tuyau peut par exemple être fait de matériau synthétique ou de métal, une enveloppe de matériau d'isolation synthétique est extrudée et est installée autour du tuyau, et dans lequel une couche extérieure d'étanchéité est extrudée, après quoi des nervures circonférentielles sont formées dans la couche extérieure, **caractérisé en ce que** la couche extérieure dotée de nervures circonférentielles est déplacée en direction de l'assemblage tuyau/enveloppe, est dotée d'une entaille longitudinale et ensuite est installée autour de l'enveloppe par le côté.

2. Procédé selon la revendication 1, dans lequel les nervures circonférentielles sont formées au moyen d'une série d'éléments de formation de nervures venant en prise radialement avec la couche extérieure quittant son extrudeuse, lesdits éléments de formation de nervures se déplaçant conjointement avec la couche extérieure extrudée, dans lequel, de préférence, il existe deux séries d'éléments de formation de nervures diamétralement opposés l'un à l'autre venant en prise avec la couche extérieure et la déformant, dans lequel, de préférence, des ouvertures d'aspiration dans les éléments de formation de nervures sont utilisées pour supporter la couche extérieure pendant la formation des nervures.

3. Procédé selon la revendication 1 ou 2, dans lequel la couche extérieure présente une interruption s'étendant radialement qui, après installation de la couche extérieure autour de l'assemblage tuyau/enveloppe et pendant l'exercice d'une force de compression radiale/tangentielle sur l'enveloppe et la couche extérieure, à l'endroit de la jonction longitudinale, est scellée au niveau des bords.

4. Procédé selon la revendication 3, dans lequel pour un processus de fusion, les bords sont soumis dans la direction tangentielle à un agent chauffé et sont ensuite poussés l'un contre l'autre et sont ensuite refroidis.

5. Procédé selon la revendication 3 ou 4, dans lequel les bords sont chauffés au moyen de gaz.

6. Procédé selon l'une quelconque des revendications précédentes, dans lequel les nervures circonférentielles et les portions de la couche extérieure située entre elles sont réalisées de telle manière qu'elles puissent être comprimées axialement et dans lequel, de préférence, la couche extérieure est faite d'un matériau thermoplastique.

7. Procédé selon l'une quelconque des revendications précédentes, dans lequel la couche extérieure est installée contiguë à et détachée de l'enveloppe.

8. Assemblage (1) destiné à la réalisation du procédé selon l'une quelconque des revendications précédentes, comprenant un stock (2, 32) de tuyau, de premiers moyens de transport (8, 9) servant à transporter de façon continue le tuyau (6) à partir du stock dans une direction du processus vers les postes de traitement suivants, une extrudeuse (3) servant à extruder en continu une enveloppe isolante (7), de seconds moyens de transport servant à conduire en continu l'enveloppe isolante de l'extrudeuse vers le tuyau en aval de son stock, des moyens (129, 130) servant à installer l'enveloppe isolante autour du tuyau pendant le transport en continu des deux afin de former un assemblage tuyau/enveloppe, une extrudeuse (15) servant à extruder la couche extérieure (18), des moyens de façonnage (17) servant à agencer des nervures circonférentielles dans la couche extérieure, et des moyens (20a) servant à reprendre l'assemblage tuyau/enveloppe/couche extérieure sur un rouleau de distribution, **caractérisé par** un troisième moyen de transport servant à acheminer la couche extérieure (18) dotée de nervures du moyen de façonnage (17) vers l'assemblage tuyau/enveloppe (6, 7) et par des moyens (12b, 13b) servant à installer la couche extérieure autour de l'assemblage tuyau/enveloppe pendant le transport en continu des deux.

9. Assemblage selon la revendication 8, muni en outre de moyens (33) servant à fermer la couche extérieure dans le sens circonférentiel après installation de la couche extérieure autour de l'assemblage tuyau/enveloppe, lesdits moyens de fermeture étant de préférence dotés de moyens (20, 21) servant à chauffer les bords de bout longitudinaux (18a, 18b) de la couche extérieure et de moyens servant à amener tangentiellement (31, 32a, b) les bords de bout longitudinaux l'un contre l'autre.

10. Assemblage selon la revendication 9, dans lequel les moyens de chauffage comprennent des buses (21) qui peuvent être placées entre les bords longitudinaux (18a, 18b) et sont orientées en direction de ceux-ci, buses auxquelles une ou plusieurs conduites d'alimentation en fluide chauffé ont été raccordées, où, de préférence, les buses (21) ont été agencées sur un support (20) destiné à celles-ci, le support pouvant être entraîné en vue d'un déplacement des buses dans la direction du processus, ou, en fonction du matériau à sceller, dans la direction opposée, une butée (22) étant, de préférence, également fournie, par exemple un pied, pour empêcher que le support n'entre en contact avec le tuyau (6).

11. Assemblage selon la revendication 10, dans lequel le support (20) est un support entraîné de façon circonférentielle, de préférence un disque entraîné en rotation.

12. Assemblage selon la revendication 9, 10 ou 11, dans lequel, à proximité des moyens de chauffage (20, 21), des moyens sont positionnés pour refroidir les parties de l'assemblage qui touchent les portions de tuyau/enveloppe/couche extérieure situées à l'extérieur de la zone de contact des bords de bout longitudinaux, ou sont en mesure de transférer de la chaleur vers ces portions d'une autre manière.

13. Assemblage selon l'une quelconque des revendications 8 à 12, dans lequel les moyens d'agencement des nervures circonférentielles comprennent au moins deux éléments de formation de nervures (17a, 17b) venant radialement en prise avec la couche extérieure, dans lequel, de préférence, les éléments de formation de nervures sont formés par des bandes de façonnage entraînées de façon circonférentielle conjointement avec la couche extérieure, de préférence deux éléments de formation de nervures étant positionnés de façon diamétralement opposée l'un à l'autre pour venir en prise avec et pour déformer la couche extérieure sur la totalité de la circonférence.

14. Assemblage selon l'une quelconque des revendications 8 à 13, dans lequel les moyens d'installation de l'enveloppe autour du tuyau et le troisième moyen de transport servant à acheminer la couche extérieure vers l'assemblage tuyau/enveloppe sont placés au moins partiellement parallèles, sur le même châssis (30), dans lequel, de préférence, les moyens d'ouverture de la couche extérieure avant son installation autour de l'assemblage tuyau/enveloppe sont placés sur le même châssis (30).

15. Rouleau de tuyau assemblé pour conditionnement thermique, produit en exécutant le procédé selon l'une quelconque des revendications 1 à 7, comprenant un tuyau (6) pour le passage d'un fluide, une enveloppe (7) de matériau isolant entourant celui-ci et une couche extérieure (18) dotée de nervures entourant celle-ci, dans lequel la couche extérieure a des bords (7a, 7b) qui ont été fusionnés ensemble et l'enveloppe a des bords (18a, 18b) qui ont été fusionnés ensemble.

16. Rouleau de tuyau assemblé pour conditionnement thermique, produit en exécutant le procédé selon l'une quelconque des revendications 1 à 7, comprenant un tuyau (6) pour le passage d'un fluide, une enveloppe (7) de matériau isolant entourant celui-ci et une couche extérieure (18) dotée de nervures entourant celle-ci, dans lequel la couche extérieure est dotée d'un joint longitudinal et l'enveloppe située au-dessous de celle-ci est interrompue.

17. Rouleau de tuyau assemblé pour conditionnement thermique, produit en exécutant le procédé selon l'une quelconque des revendications 1 à 7, comprenant un tuyau (6) pour le passage d'un fluide, une enveloppe (7) de matériau isolant entourant celui-ci et, autour de celle-ci, contigu et détaché, un manchon (18) doté de nervures circonférentielles.

18. Rouleau de tuyau assemblé selon la revendication 17, dans lequel le manchon (18) peut être poussé/tiré axialement et/ou est fabriqué en matériau thermoplastique.
